# EUROPEAN PATENT SPECIFICATION

(11) **EP 1 737 103 B1**
(45) Date of publication and mention of the grant of the patent: **08.07.2015**
(21) Application number: 05720348.1
(22) Date of filing: 09.03.2005
(51) Int. Cl.: H02K 5/22, H02K 11/00, H02K 5/10

(54) **BRUSHLESS MOTOR**
BÜRSTENLOSER MOTOR
MOTEUR SANS COLLECTEUR

(30) Priority: 11.03.2004 JP 2004069685
(43) Date of publication of application: 27.12.2006
(73) Proprietor: Valeo Thermal Systems Japan Corporation, Kohnan-machi Ohsato-gun Saitama 360-0193 (JP)
(72) Inventor: TAKAHASHI, Osamu, VALEO THERMAL SYSTEMS JAPAN CORP, Osato-gun, Saitama 3600193 (JP); UMEGAKI, Fuhito, VALEO THERMAL SYSTEMS JAPAN CORP, Osato-gun, Saitama 3600193 (JP)
(74) Representative: Von Rohr Patentanwälte Partnerschaft mbB
(86) International application number: PCT/JP2005/004076
(87) International publication number: WO 2005/088807

(56) References cited:
- DE-A1- 3 805 060
- JP-A- 2000 004 566
- JP-A- 2003 116 254
- JP-A- 2003 116 254
- JP-A- 2003 348 785
- JP-A- 2003 348 785

## Description

### Technical Field

The present invention relates to a brushless motor, more particularly, to a brushless motor that realizes a simpler and easier connection work of its electrical connection parts, a simplified structure, and so on.

### Background Art

Conventionally, as a brushless motor of this type, there has been generally known, for example, a brushless motor having a casing in which a stator and a rotor are provided and a circuit board is housed (see, for example, Patent document 1).

Patent document 1: Japanese Patent Application Laid-open No. Hei 9-117098

In such a conventional brushless motor, the supply of power and signals to the circuit board from an external circuit is realized by a structure such that part of an electrical wiring between the external circuit and the circuit board is drawn into the casing to be directly soldered to the circuit board.

However, in such a conventional brushless motor, waterproofing has to be considered so as to prevent water leakage to the inside of the casing from a drawn portion of the electrical wiring between the external circuit and the circuit board, which poses a problem that the structure of the casing becomes complicated, resulting in higher price of the brushless motor. Moreover, the soldering work of the electrical wiring to the circuit board is required. This is contrary to a demand for minimizing such a relatively troublesome work, and in addition, poses a problem of not only lowering assembly easiness of the whole brushless motor but also causing a price increase due to an increase in the work time, and the like.

DE 3 805 060 A1 relates to an electric motor having a first and a second case member which holds a circuit board between them. The circuit board and a connector is attached to the first case member.

JP 2003116254 A relates to a brushless motor. The motor comprises a first and a second case member. A connector is attached to the second case member.

### Disclosure of the Invention

### Problems that the Invention shall Solve

The present invention was made in view of the above circumstances, and an object thereof is to provide a brushless motor with a relatively simple structure in which its electrical connection parts can be surely connected by an easy work.

### Means for Solving the Problems

A brushless motor according to an embodiment of the present invention includes: a casing that houses and holds a circuit board and supports a rotor in a rotatable manner,
wherein the casing is composed of a first case member and a second case member that are fitted to each other, with the circuit board being housed and held between the first and second case members,
wherein the circuit board and a first connector, which electrically connects the circuit board and an external part, are attached to the first case member, and
wherein a second connector fitted to the first connector is disposed on the second case member by integral molding.

### Advantage of the Invention

According to the preset invention, when the first case member and the second case member are assembled together, the connector attached to the circuit board and an opponent connector to be fitted thereto are fitted to each other at the same time. Therefore, a connection work of electrical connection parts can be easily completed with a relatively simple structure. Consequently, an effect is brought about that it is possible to provide a brushless motor that can be assembled with an easier work and is lower in price compared with a conventional brushless motor.

Further, since the connector is integrally disposed on one of the case members, the number of parts can be reduced, which can bring about an effect that a brushless motor having a simpler structure and lower in price can be provided.

### Brief Description of the Drawings

- FIG. 1: is a vertical cross-sectional view showing a first structure example of a brushless motor of an embodiment of the present invention;
- Fig. 2: is a plane view of the brushless motor shown in Fig. 1 before a blower is attached thereto;
- Fig. 3: is a side view of the brushless motor shown in Fig. 1 before the blower is attached thereto;
- Fig. 4: is a side view of a casing of the brushless motor shown in Fig. 1 on an external connector connection part side;
- Fig. 5: is a bottom view of the brushless motor shown in Fig. 1;
- Fig. 6: is an exploded vertical cross-sectional view showing an essential part to explain the assembly procedure of the casing;
- Fig. 7: is a side view, partly in section, showing a board-side connector used in the brushless motor shown in Fig. 1 in a state where it is attached to a circuit board;
- Fig. 8: is a bottom view of the board-side connector used in the brushless motor shown in Fig. 1 in the state where it is attached to the circuitboard;
- Fig. 9: is an overall perspective view showing a structure example of a jack terminal of the board-side connector used in the brushless motor shown in Fig. 1;
- Fig. 10: is a plane view of a cover-side connector used in the brushless motor shown in Fig. 1;
- Fig. 11: is an overall perspective view showing a structure example of a plug terminal of the cover-side connector and a plug terminal of an external connector connection part used in the brushless motor shown in Fig. 1;
- Fig. 12: is a plane view of a cover-side connector in a second structure example of the brushless motor of the embodiment of the present invention;
- Fig. 13: is a cross-sectional view taken along the A-A line in Fig. 12;
- Fig. 14: is a side view, partly in section, of a board-side connector in the second structure example of the brushless motor of the embodiment of the present invention;
- Fig. 15: is a bottom view of the board-side connector in the second structure example of the brushless motor of the embodiment of the present invention in a state where it is attached to the circuit board;
- Fig. 16: is a cross-sectional view taken along the B-B line in Fig. 15;
- Fig. 17: is a plane view of a cover-side connector in a third structure example of the brushless motor of the embodiment of the present invention;
- Fig. 18: is a cross-sectional view taken along the C-C line in Fig. 17;
- Fig. 19: is a side view of a cover-side connector in a fourth structure example of the brushless motor of the embodiment of the present invention;
- Fig. 20: is a cross-sectional view taken along the D-D line in Fig. 21;
- Fig. 21: is a plane view of the cover-side connector in the fourth structure example of the brushless motor of the embodiment of the present invention;
- Fig. 22: is a side view, partly in section, of a board-side connector in the fourth structure example of the brushless motor of the embodiment of the present invention in a state where it is attached to the circuit board;
- Fig. 23: is a bottom view of the board-side connector in the fourth structure example of the brushless motor of the embodiment of the present invention in the state where it is attached to the circuit board;
- Fig. 24: is a cross-sectional view taken along the E-E line in Fig. 23;
- Fig. 25: is a front view, partly in section, of a cover-side connector in a fifth structure example of the brushless motor of the embodiment of the present invention;
- Fig. 26: is a cross-sectional view taken along the F-F line in Fig. 27:
- Fig. 27: is a plane view of the cover-side connector in the fifth structure example of the brushless motor of the embodiment of the present invention;
- Fig. 28: is a side view, partly in section, of a board-side connector in the fifth structure example of the brushless motor of the embodiment of the present invention in a state where it is attached to a circuit board;
- Fig. 29: is a rear view of the board-side connector in the fifth structure example of the brushless motor of the embodiment of the present invention in the state where it is attached to the circuit board; vention in the state where it is attached to the circuit board;
- Fig. 30: is a bottom view of the board-side connector in the fifth structure example of the brushless motor of the embodiment of the present invention in the state where it is attached to the circuit board; and
- Fig. 31: is a cross-sectional view taken along the G-G line in Fig. 30.

### Explanation of Reference Symbols

- 1: Casing
- 2: Stator
- 3: Rotor
- 21: Motor cover
- 21b: First ring-shaped peripheral wall
- 22: Board cover
- 22b: Second ring-shaped peripheral wall
- 28: Board-side connector
- 28a: Fitting/housing portion
- 28b: Fixed portion
- 28c: Groove
- 29: Cover-side connector
- 30: External connector connection part

### Description of Specific Embodiment

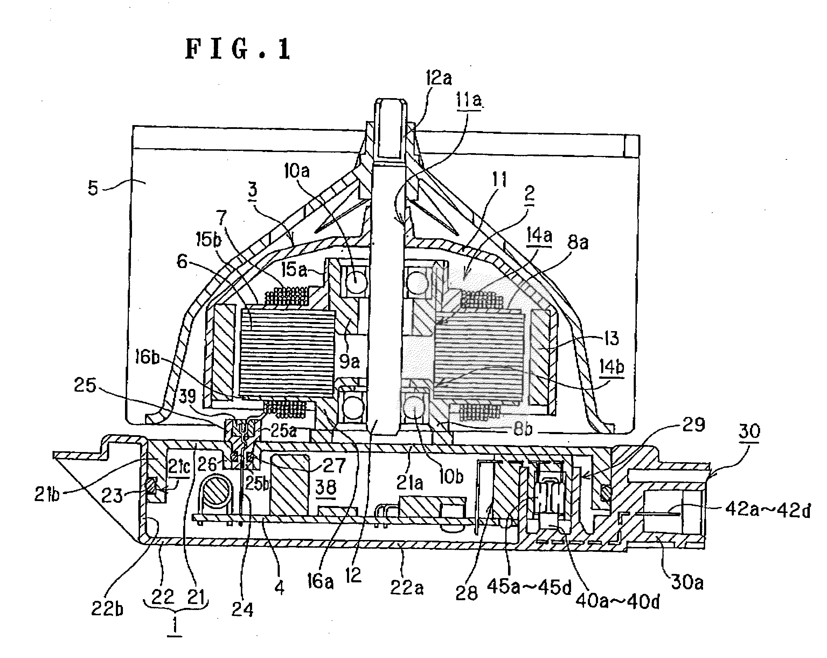

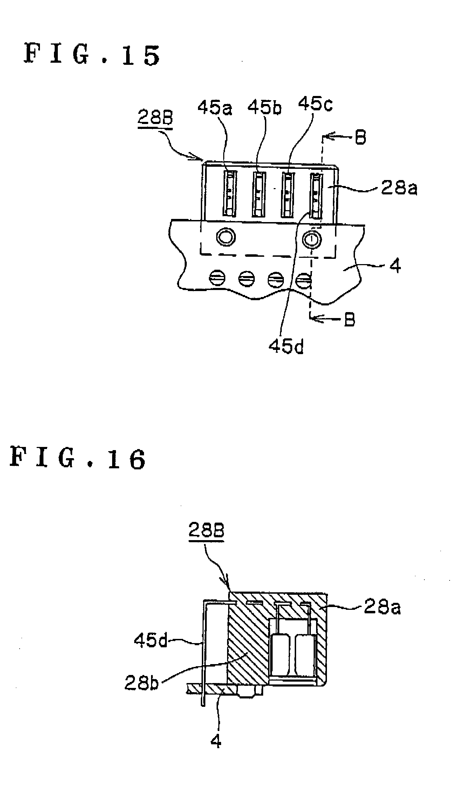

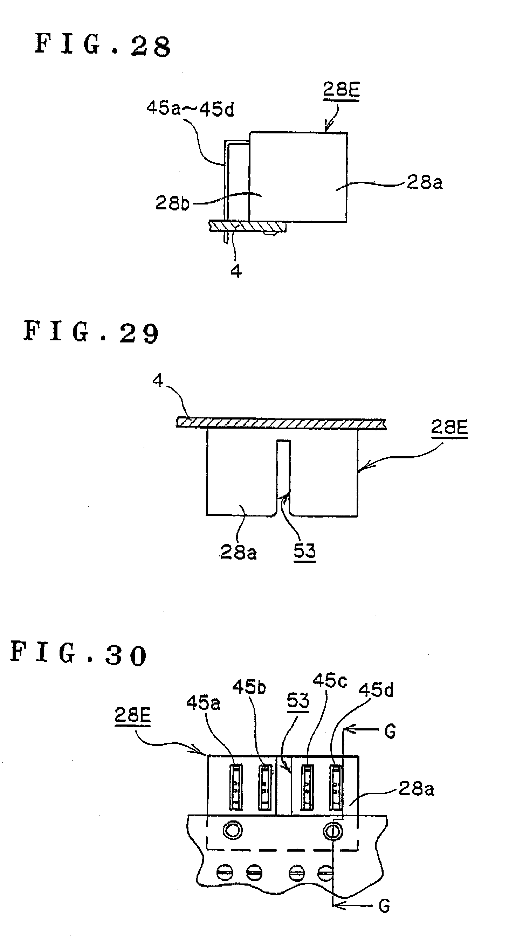

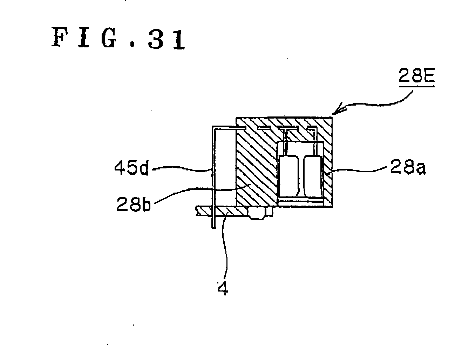

Hereinafter, an embodiment of the present invention will be described with reference to Fig. 1 to Fig. 31.

It should be noted that members, dispositions, and so on described below are not intended to restrict the present invention, and various modifications can be made without departing from the scope of the present invention as defined by the appended claims.

First, the entire structure of a brushless motor of the embodiment of the present invention will be described with reference to Fig. 1 to Fig. 5.

The brushless motor of the embodiment of the present invention is mainly composed of a stator 2 whose base portion is fixed to a casing 1, a rotor 3 rotatably provided on the stator 2, and a circuit board 4 controlling current supply to an exciting coil 7 wound around the stator 2 (see Fig. 1). The brushless motor having such a structure is used for rotary-driving, for example, a blower 5 in a vehicle air-conditioner, and the blower 5 is fixed to a tip 12a of a rotary shaft 12 (see Fig. 1),

The stator 2 in the embodiment of the present invention has a laminated core 6, the exciting coil 7 wound around the laminated core 6, an upper insulation cover 8a, and a lower insulation cover/bearing holder 8b, and is disposed inside the rotor 3.

The upper insulation cover 8a has: a portion 15a in a hollow cylindrical shape; and a ring-shaped flange 15b provided at an appropriate position on an outer peripheral surface of the portion 15a. An upper bearing holder 9a is press-fitted in the portion 15a in the hollow cylindrical shape. The upper bearing holder 9a holds an upper bearing 10a and has an upper press-fitted portion 14a in a columnar shape press-fitted to an upper portion (a rotor 3 side in Fig. 1) of the laminated core 6.

The lower insulation cover/bearing holder 8b is disposed on a lower side (a casing 1 side in Fig. 1) of the laminated core 6 to function as an insulation cover similarly to the aforesaid upper insulation cover 8a, and also houses/holds a lower bearing 10b. Specifically, similarly to the aforesaid upper insulation cover 8a, the lower insulation cover/bearing holder 8b has: a portion 16a in a substantially hollow cylindrical shape in which the lower bearing 10b is disposed; and a ring-shaped flange 16b formed at an appropriate position on an outer peripheral surface of the portion 16a. Further, at an end of the portion 16a on an opposite side of the casing 1, a lower press-fitted portion 14b press-fitted in a lower portion of the laminated core 6 is provided.

In the laminated core 6, the upper press-fitted portion 14a of the upper bearing holder 9a is press-fitted in the upper center portion thereof and the lower press-fitted portion 14b of the lower insulation cover/bearing holder 8b is press-fitted to the lower center portion thereof, so that the laminated core 6 is sandwiched and supported by the upper insulation cover 8a and the upper bearing holder 9a and the lower insulation cover/bearing holder 8b from above and under (see Fig. 1).

In the lower insulation cover/bearing holder 8b, an end portion opposite the end portion where the lower press-fitted portion 14b is formed is fixed to the motor cover 21 being a first case member constituting the casing 1. Center portions of the upper bearing holder 9a and the lower insulation cover/bearing holder 8b are hollow, and the rotary shaft 12 is inserted through the hollow portions, so that the rotary shaft 12 is rotatably supported on the casing 1 by the upper bearing 10a and the lower bearing 10b (see Fig. 1).

The rotor 3 has a yoke 11 substantially in a bowl shape. An open surface of the yoke 11 is positioned on a casing 1 side and a closed surface thereof forms an upper surface. The rotary shaft 12 is inserted through a through hole 11a formed in a center portion of the closed surface, so that the rotor 3 is fixed to the shaft 12 and held on the casing 1.

On an inner peripheral surface of the yoke 11, a plurality of magnets 13 are fixedly arranged in a circumferential direction at appropriate intervals and face a peripheral surface of the laminated core 6 via an appropriate interval (see Fig. 1).

The casing 1 is composed of the motor cover 21 and the board cover 22, and in particular, unlike a conventional casing, the casing 1 in the embodiment of the present invention does not have a through hole or the like for ventilation between the inside and the outside, and thus is formed as a hermetic vessel.

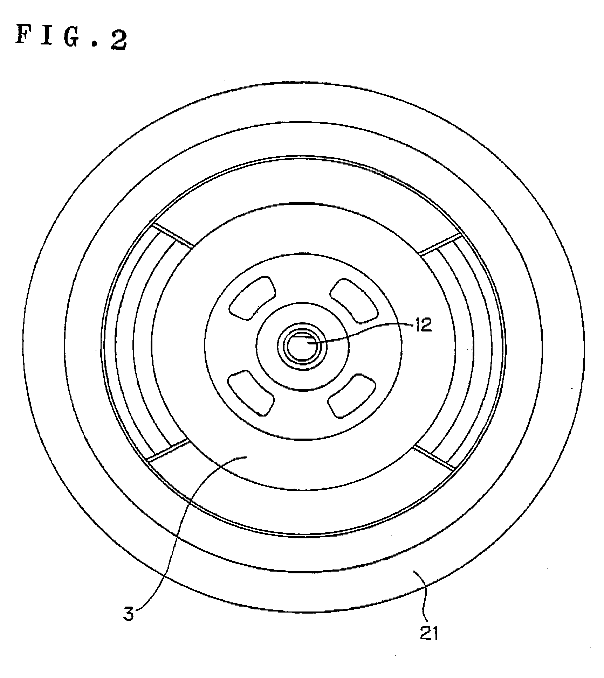

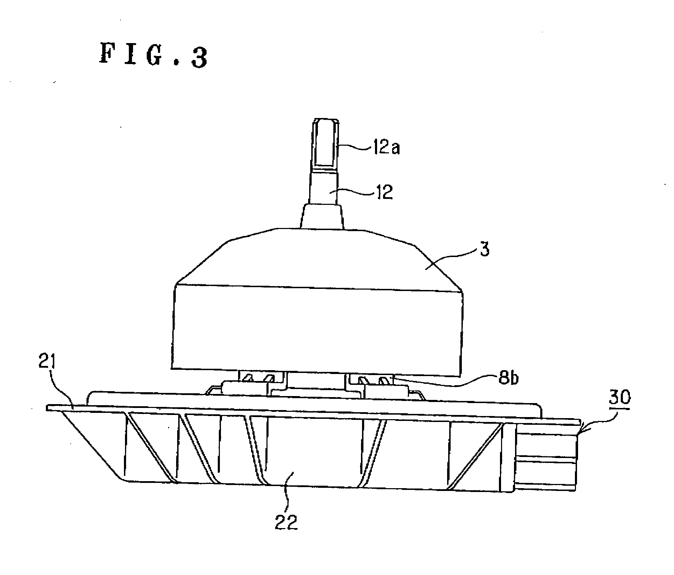

In a plane view, an outer appearance of the whole motor cover 21 as the first case member is in a substantially disk shape (see Fig. 2), and the motor cover 21 has a first ring-shaped peripheral wall 21b provided upright on a peripheral edge of a motor cover base portion 21a in a substantially disk shape (see Fig. 1). On an upper surface side of the motor cover 21, the rotor 3 is rotatably supported as described above (see Fig. 1 and Fig. 3).

In an appropriate position of an outer peripheral surface of the first ring-shaped peripheral wall 21b, a ring-shaped groove 21c is formed in a recessed manner, and an 0-ring 23 is fitted in the ring-shaped groove 21c, so that the O-ring 23 is fitted around the first ring-shaped peripheral wall 21b.

Further, a not-shown portion of a circuit board 4 is screw-fixed to a rear surface side of the motor cover 21, that is, a side opposite the side on which the rotor 3 is rotatably supported.

The circuit board 4 and the exciting coil 7 are electrically connected to each other via a terminal bar 24 made of a conductive member. Specifically, in the embodiment of the present invention, one end of the terminal bar 24 is formed in a substantially U-shape so as to enable connection to the exciting coil 7, and a portion right under the U-shaped end is buried in a waterproof case 25 (see Fig. 1).

The waterproof case 25 in the embodiment of the present invention is in a substantially cylindrical shape as a whole and is composed of a large-diameter portion 25a and a small-diameter portion 25b. The large-diameter portion 25a is in a hollow bottomed-cylindrical shape. The U-shaped end of the terminal bar 24 is positioned in the large-diameter portion 25a, a portion right under the U-shaped end of the terminal bar 24 corresponding to an axial length of the small-diameter portion 25b is buried in the small-diameter portion 25b, and the other portion of the terminal bar 24 is drawn out from the small-diameter portion 25b (see Fig. 1).

At an appropriate position of the motor cover base portion 21a of the motor cover 21, a hollow cylindrical fitting portion 26 is formed to protrude toward a rear surface side of the motor cover 21, and the small-diameter portion 25b of the waterproof case 25 is inserted in the cylindrical fitting portion 26. An O-ring 27 is fitted around an outer peripheral surface of the small-diameter portion 25b to ensure water-tightness of this portion.

In a state where the waterproof case 25 is inserted in the cylindrical fitting portion 26 as described above, an end of the exciting coil 7 is soldered to the U-shaped end of the terminal bar 24, thereafter, the hollow portion of the large-diameter portion 25a is filled with an adhesive 39, and the other end of the terminal bar 24 is soldered to the circuit board 4 (see Fig. 1).

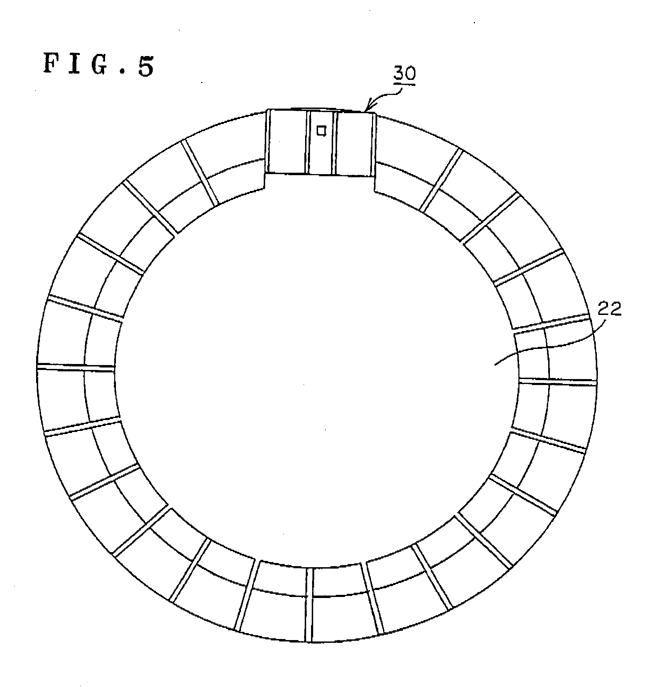

The board cover 22 as a second case member has a substantially disk-shaped outer appearance as a whole in a bottom view, similarly to the motor cover 21 (see Fig. 1 and Fig. 5), and has a second ring-shaped peripheral wall 22b provided upright on a peripheral edge of a board cover base portion 22a (see Fig. 1). The inside diameter of the second ring-shaped peripheral wall 22b is substantially equal to the outside diameter of the aforesaid first ring-shaped peripheral wall 21b of the motor cover 21 (see Fig. 1).

Therefore, the motor cover 21 is fitted to the board cover 22, with an outer peripheral portion of the first ring-shaped peripheral wall 21b thereof being joined to an inner peripheral surface of the second ring-shaped peripheral wall 22b of the board cover 22 (see Fig. 1). Between the motor cover 21 and the board cover 22, a housing space 38 is formed.

The circuit board 4 is supplied with power and driving signals from an external part via a board-side connector 28, a cover-side connector 29, and an external connector connection part 30 which will be described later, thereby constituting an electronic circuit for controlling current supply to the exciting coil 7.

The circuit board 4 with the board-side connector 28 being attached thereto in a manner described below is screw-fixed to the motor cover 21 at a not-shown portion, and the board-side connector 28 is also screw-fixed to the motor cover 21 at a not-shown portion.

The cover-side connector 29, which will be described in detail later, to be fitted to the board-side connector 28 is provided on the board cover base portion 22a of the board cover 22 by integral molding.

When the motor cover 21 and the board cover 22 are fitted to each other, the board-side connector 28 and the cover-side connector 29 are fitted to each other at the same time to be electrically connected to each other.

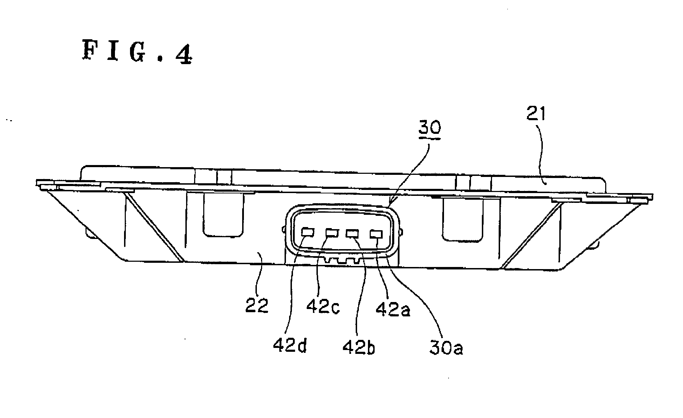

The external connector connection part 30 electrically connected to the cover-side connector 29 is provided on the board cover 22 by integral molding, similarly to the cover-side connector 29, and when a not-shown external connector is connected to the external connector connection part 30, power supply voltage and driving signals can be supplied to the circuit board 4 from the external part (see Fig. 4).

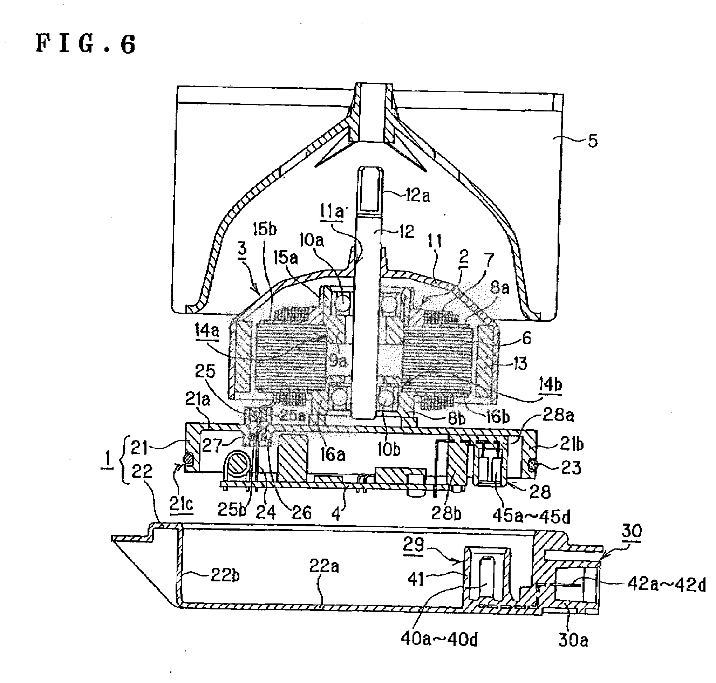

Next, the board-side connector 28, the cover-side connector 29, and the external connector connection part 30 will be more specifically described with reference to Fig. 6 to Fig. 11.

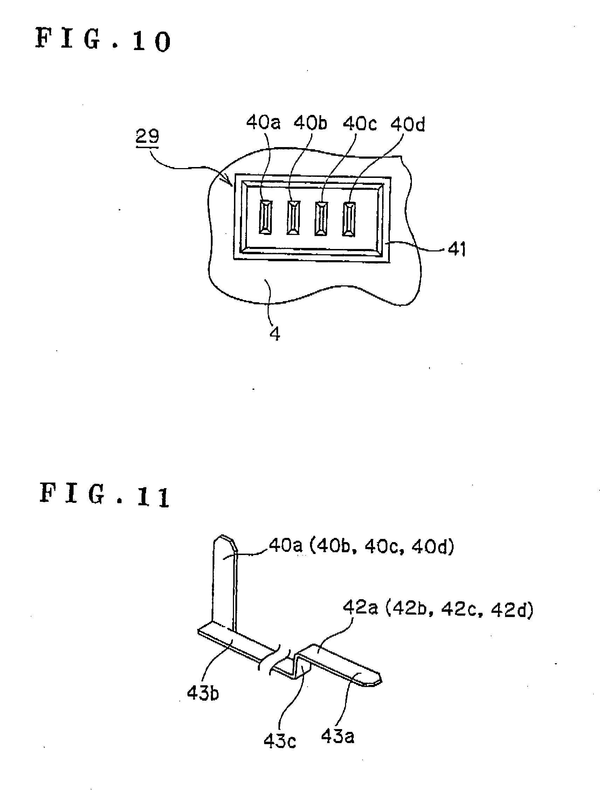

First, the cover-side connector 29 as a second connector in the embodiment of the present invention will be described. The cover-side connector 29 includes: four plug terminals 40a to 40d formed on the board-cover base portion 22a of the board cover 22 by insert molding; a looped peripheral wall 41 formed upright on the board cover 22 by integral molding to surround the four plug terminals 40a to 40d (see Fig. 6 and Fig. 10).

In a plane view, the peripheral wall 41 in this structure example is in a rectangular frame shape and surrounds the four plug terminals 40a to 40d (see Fig. 10).

The plug terminals 40a to 40d are molded integrally with external connection plug terminals 42a to 42d of the external connector connection part 30 which will be described later. In the embodiment of the present invention, as shown in Fig. 11, on a base portion side of each of the plug terminals 40a to 40d in a substantially strip shape, a base portion side of each of the external connection plug terminals 42a to 42d is disposed so that a plane including the base portion side of each of the external connection plug terminals 42a to 42d is orthogonal to a plane including each of the plug terminals 40a to 40d.

Specifically, each of the external connection plug terminals 42a to 42d has: a jack fitting portion 43a in a substantially strip shape to be fitted to a jack of a not-shown external connector; a connection portion 43b similarly in a substantially strip shape connected to the base portion side of each of the plug terminals 40a to 40d; and a bent portion 43c coupling the jack fitting portion 43a and the connection portion 43b, and a plane including the jack fitting portion 43a and a plane including the connection portion 43b are parallel to each other, and the bent portion 43c is orthogonal to the both planes (see Fig. 11),

The external connector connection part 30 as a third connector includes: a connector connection part housing 30a protrudingly formed on an outer peripheral surface of the ring-shaped peripheral wall 22b of the board cover 22 by integral molding; and the external connection plug terminals 42a to 42d disposed in the connector connection part housing 30a (see Fig. 4, Fig. 6, and Fig. 11). The external connection plug terminals 42a to 42d are integrally molded with the plug terminals 40a to 40d as described above, and are disposed by insert molding when the board cover 22 is formed.

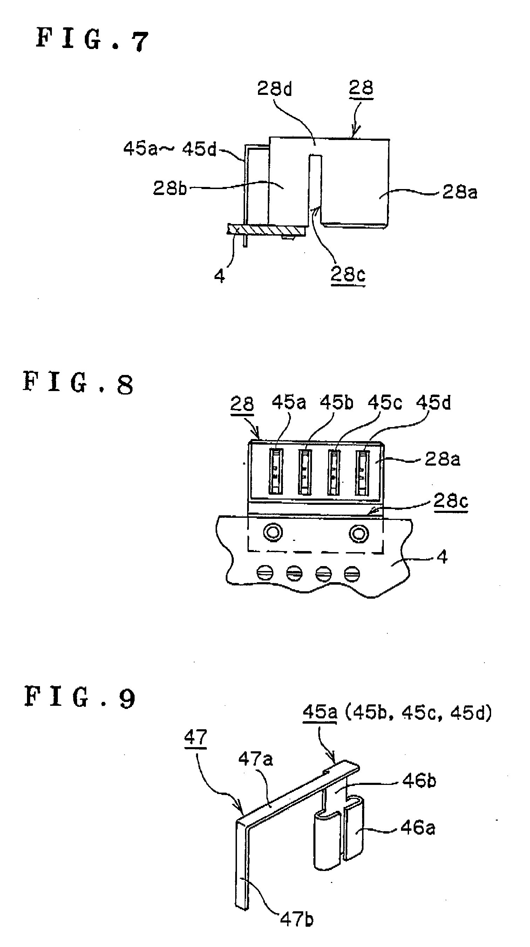

The board-side connector 28 as a first connector has: a fitting/housing portion 28a having a substantially cuboid outer appearance so as to be insertable to the inside of the peripheral wall 41 of the cover-side connector 29; and a fixed portion 28b extending from the fitting/housing portion 28a. The whole outer appearance of the board-side connector 28 is in a substantially cuboid shape, and jack terminals 45a to 45d are provided therein by insert molding (see Fig. 7 and Fig. 8).

Between the fitting/housing portion 28a and the fixed portion 28b, an insertion groove 28c is formed, in which a part of the peripheral wall 41 is fitted when the board-side connector 28 is fitted to the cover-side connector 29 (see Fig. 1).

The board-side connector 28 has a screw hole (not shown) for use when it is screw-fixed to the motor cover 21, the screw hole being provided in the vicinity of a substantially center of a portion 28d-side planar part that couples the fixed portion 28b and the fitting/housing portion 28a. The board-side connector 28 is screw-fixed also to the motor cover 21 via this screw hole,

End surfaces of the fixed portion 28b and the fitting/housing portion 28a on the opposite side of the surface screw-fixed to the motor cover 21 are flush with each other, and the end surface of the fixed portion 28b is screw-fixed to the vicinity of an edge of the circuit board 4 (see Fig.6, Fig. 7 and Fig. 8).

Further, the end surface of the fitting/housing portion 28a flush with the end surface of the fixed portion 28b fixed to the circuit board 4 is a surface via which the aforesaid plug terminals 40a to 40d of the cover-side connector 29 are inserted and detached, and the jack terminals 45a to 45d described below are provided in the fitting/housing portion 28a and the fixed portion 28b by insert molding.

For example, each of the jack terminals 45a to 45d in this structure example has: a portion 46a that is near the end surface of the fitting/housing portion 28a flush with the end surface of the fixed portion 28b fixed to the circuit board 4 and has a substantially flat envelope shape so as to allow each of the plug terminals 40a to 40d to be inserted therein; and a portion 46b in a strip shape that extends from part of the portion 46a in the substantially flat envelope shape to the vicinity of an end surface of the fitting/housing portion 28a opposite the end surface via which the cover-side connector 29 is attached/detached (see Fig. 6 and Fig, 9). A board connection piece 47 extends from an end of the strip-shaped portion 46a. Specifically, the board connection piece 47 has a portion 47a and a portion 47b. The portion 47a extends from the end of the strip-shaped portion 46b toward the fixed portion 28b orthogonally to the portion 46b and has a length large enough for part thereof to protrude from the fixed portion 28b. The portion 47b is bent in an end of the portion protruding from the fixed portion 28b at a right angle toward the circuit board 4-side end surface of the fixed portion 28b (see Fig. 6 and Fig. 9). Here, the end portion of the portion 47b is long enough to be soldered to the circuit board 4 when the fixed portion 28b is fixed to the circuit board 4 (see Fig. 6 and Fig. 7).

Next, the procedure for fitting the board-side connector 28 and the cover-side connector 29 to each other by assembling the motor cover 21 and the board cover 22 together in this structure will be described with reference to Fig. 1 and Fig. 6.

First, it is assumed that the circumferential assembly positions of the motor cover 21 and the board cover 22 are determined in advance, and for example, marks are put on appropriate positions in peripheral edges thereof. Here, by aligning the pre-set assembly positions, the board-side connector 28 and the cover-side connector 29 are directly fitted to each other when the motor cover 21 and the board cover 22 are fitted to each other.

It is also premised that the stator 2, the rotor 3, and so on as well as the circuit board 4 have already been fixed on the motor cover 21, and the O-ring 23 has been fitted around the motor cover 21.

Under such premises, the predetermined positions of the motor cover 21 and the board cover 22 are aligned with each other so that they are in a proper circumferential relative position, and subsequently, the first ring-shaped peripheral wall 21b of the motor cover 21 is gradually pushed into the board cover 22. In accordance with the insertion of the motor cover 21 into the board cover 22, the board-side connector 28 and the cover-side connector 29 start to be fitted to each other, and when a top of the peripheral wall 41 of the cover-side connector 29 abuts on a bottom of the insertion groove 28c of the board-side connector 28, the fitting of the motor cover 21 and the board cover 22 and the fitting of the board-side connector 28 and the cover-side connector 29 are completed (see Fig. 1 and Fig. 6).

Then, by fitting the not-shown external connector to the external connector connection part 30, it is possible to supply power supply voltage and driving signals from the external part.

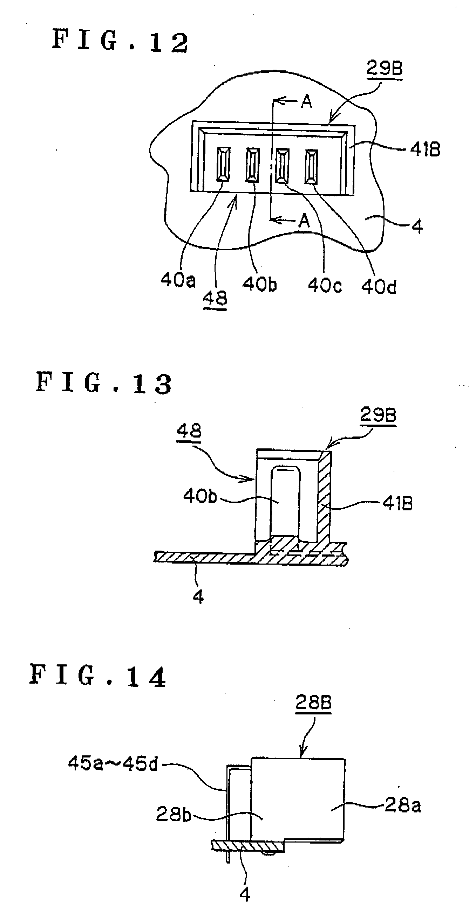

Next, a second structure example will be described with reference to Fig. 12 to Fig. 16. The same reference numerals and symbols are used to designate the same components as those of the first structure example shown in Fig. 1 to Fig. 11, and detailed description thereof will be omitted. The following description will focus on what are different.

A cover-side connector 29B in the second structure example is different from the cover-side connector 29 in the above-described first structure example in that part of its peripheral wall 41B is an open surface, and the other structure is basically the same as that of the cover-side connector 29 in the first structure example described with reference to Fig. 6, Fig. 10, and Fig. 11.

Specifically, the peripheral wall 41B of the cover-side connector 29B in the second structure example has an open surface 48 instead of the portion fitted to the insertion groove 28c of the board-side connector 28 in the above-described first structure example (see Fig. 12 and Fig. 13). Accordingly, a board-side connector 28B in the second structure example does not have the insertion groove 28c of the board-side connector 28 shown in Fig. 7 and Fig. 8 (see Fig. 14 to Fig. 16).

In such a structure example, as in the first structure example previously described, the fitting of the board-side connector 28B and the cover-side connector 29B is completed at the same time when the assembly is completed by the fitting of the motor cover 21 and the board cover 22.

In this structure example, in the peripheral wall 41B, the portion fitted to the insertion groove 28c of the board-side connector 28 in the first structure example is formed as the open surface 48, but it goes without saying that the opposite portion may be formed as an open surface.

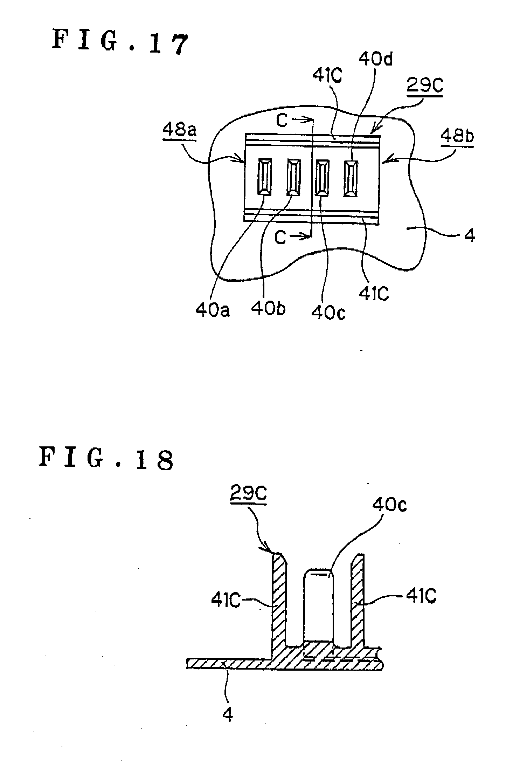

Next, a third structure example will be described with reference to Fig. 17 and Fig. 18. The same reference numerals and symbols are used to designate the same components as those of the first structure example shown in Fig. 1 to Fig. 11, and detailed description thereof will be omitted. The following description will focus on what are different.

A cover-side connector 29C in the third structure example is different from that in the second structure example in the arrangement of a peripheral wall 41C as described below. The other structure is basically the same as that of the cover-side connector 29 in the first structure example described with reference to Fig. 6, Fig. 10, and Fig. 11.

Specifically, in the peripheral wall 41C of the cover-side connector 29 in the third structure example, both sides in the arrangement direction of the plug terminals 40a to 40d (right and left direction on the paper in Fig. 17) are open surfaces 48a, 48b (see Fig. 17 and Fig. 18).

In this case, the board-side connector 28 may have the same structure as that in the first structure example described above with reference to Fig. 6, Fig. 7, Fig. 8, and Fig. 9.

In such a structure example, as in the first structure example previously described, the fitting of the board-side connector 28 and the cover-side connector 29C is completed at the same time when the assembly is completed by the fitting of the motor cover 21 and the board cover 22.

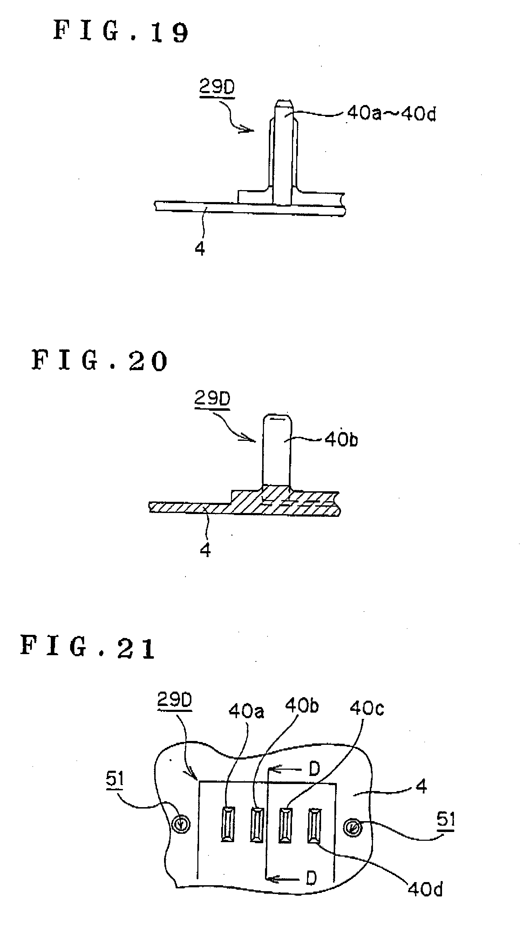

Next, a fourth structure example will be described with reference to Fig. 19 to Fig. 24. The same reference numerals and symbols are used to designate the same components as those of the first structure example shown in Fig. 1 to Fig. 11, and detailed description thereof will be omitted. The following description will focus on what are different.

A cover-side connector 29D in the fourth structure example is different from the cover-side connector 29 in the above-described first structure example in that it does not have the peripheral wall 41 (see Fig. 10) of the cover-side connector 29 (see Fig. 19 to Fig. 21), and the other structure is basically the same as that of the cover-side connector 29 in the first structure example described with reference to Fig. 6, Fig. 10, and Fig. 11.

Considering the structure of the cover-side connector 29D without the peripheral wall 41 (see Fig. 10) as described above, a board-side connector 28D is screw-fixed to the board cover 22, whereby a mechanical load to the plug terminals 40a to 40d due to the fitting of the board-side connector 28D and the cover-side connector 29D can be reduced.

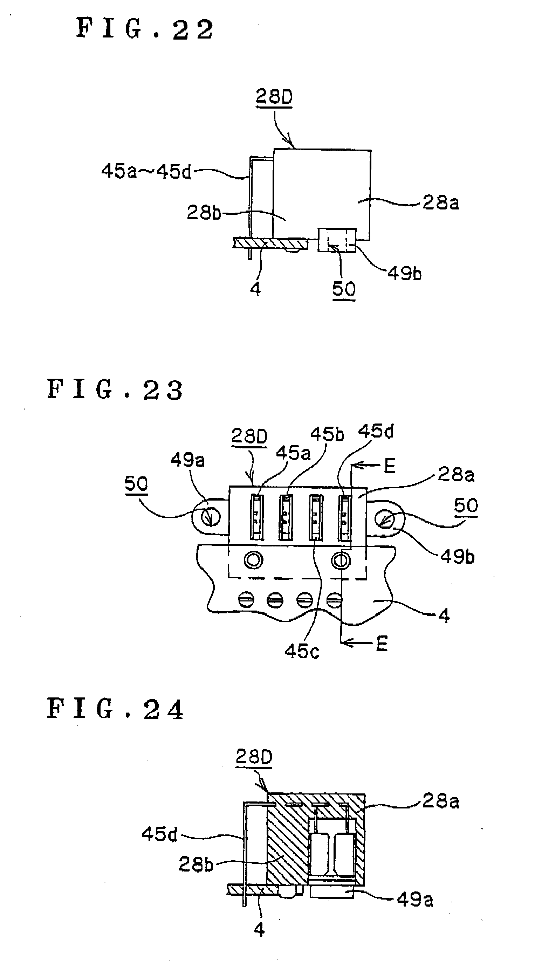

Specifically, the board-side connector 28D does not have the insertion groove 28c (see Fig. 7 and Fig. 8) of the board-side connector 28 in the first structure example, but has screw-fixing projections 49a, 49b that are protrudingly formed on both ends of the fitting/housing portion 28a in the arrangement direction of the jack terminals 45a to 45d, and each of the screw-fixing projections 49a, 49b has a threaded hole 50 to which a not-shown screw is screwed in (see Fig. 22 and Fig. 23). Except the above-described respects, the board-side connector 28D has basically the same structure as that of the board-side connector 28 in the first structure example described with reference to Fig. 7 to Fig. 9.

The board cover 22 has screw through holes 51 formed on both sides of the cover-side connector 29D at positions corresponding to the aforesaid threaded holes 50 (see Fig. 21).

The board-side connector 28D is screw-fixed to the board cover 22 via the screw-fixing projections 49a, 49d in such a manner that the not-shown screws are screwed into the screw-fixing projections 49a, 49b in advance before the motor cover 21 and the board cover 22 are fitted to each other, and after the motor cover 21 and the board cover 22 are fitted to each other, that is, after the board-side connector 28D and the cover-side connector 29D are fitted to each other, not-shown nuts are screwed to portions of the screws protruding from a rear side of the board cover 22 to fasten the screws.

In such a structure, as in the first structure example, the fitting of the board-side connector 28D and the cover-side connector 29D is completed at the same time when the assembly is completed by the fitting of the motor cover 21 and the board cover 22.

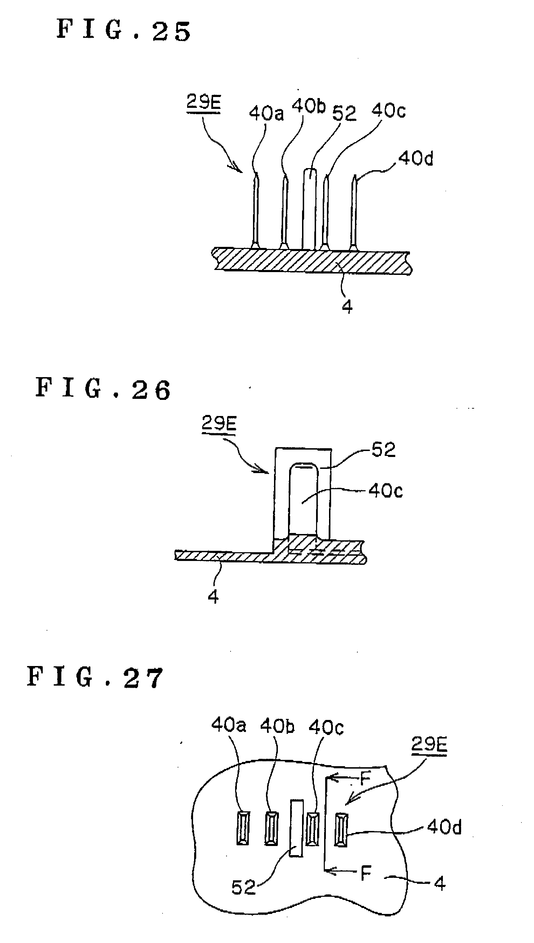

Finally, a fifth structure example will be described with reference to Fig. 25 to Fig. 31. The same reference numerals and symbols are used to designate the same components as those of the first structure example shown in Fig. 1 to Fig. 11, and detailed description thereof will be omitted. The following description will focus on what are different.

A cover-side connector 29E in the fifth structure example has a guide piece 52 in addition to the aforesaid structure of the cover-side connector 29D shown in Fig. 19 to Fig. 21.

Specifically, at an appropriate position between any two of the plug terminals 40a to 40d, more specifically, in this structure example, a position between two center plug terminals 40b, 40c among the four plug terminals 40a to 40d and slightly closer to the plug terminal 40c, the guide piece 52 is provided upright on the board cover 22 (see Fig. 25 to Fig. 27). The guide piece 52 is intended for smoother fitting of a board-side connector 28E and the cover-side connector 29E. The guide piece 52 has a substantially strip-shaped outer appearance as a whole, is slightly larger in thickness and width than the plug terminals 40a to 40d similarly in a substantially strip shape, and is disposed in parallel to the plug terminals 40a to 40d (see Fig. 25 to Fig. 27).

The board-side connector 28E has a guide groove 53 in a fitting/housing portion 28a so as to correspond to the aforesaid guide piece 52, and when the board-side connector 28E and the cover-side connector 29E are fitted to each other, the aforesaid guide piece 52 is inserted in the guide groove 53 to ensure the fitting of the board-side connector 28E and the cover-side connector 29E.

In this structure example, the guide piece 52 is provided between the plug terminals 40b, 40c, but it goes without saying that this position is not restrictive and the guide piece 52 may be provided at any other position. Further, the shape of the guide piece 52 is not limited to the aforesaid strip shape and may be any other shape.

It goes without saying that the aforesaid board-side connectors 28, 28B, 28C, 28D, 28E may be provided on the board cover 22 and the corresponding cover-side connectors 29, 29B, 29D, 29E may be provided on the circuit board 4.

### Industrial Applicability

A connector to be fitted to an external connector is provided integrally on a casing of a brushless motor, thereby ensuring waterproofing especially in the connector portion. Therefore, this structure is applicable to, for example, a brushless motor for driving a blower of a vehicle airconditioner that requires waterproofing.

## Claims

1. A brushless motor comprising a casing (1) that houses and holds a circuit board (4) and supports a rotor (3) in a rotatable manner,
wherein said casing is composed of a first case member (21) and a second case member (22) that are fitted to each other, with the circuit board (4) being housed and held between the first and second case members (21, 22), wherein a second connector (29, 29B, 29C, 29D, 29E) is disposed on the second case member (22) by integral molding,
**characterized in,**
**that** the circuit board (4) and a first connector (28, 28B, 28D, 28E), which electrically connects the circuit board (4) and an external part, are attached to the first case member (21) and that the second connector (29, 29B, 29C, 29D, 29E) is fitted to the first connector (28, 28B, 28D, 28E)

2. The brushless motor according to claim 1,
wherein the first connector (28, 28B, 28D, 28E) has a portion that protrudes outward from an edge of the circuit board (4) when the first connector (28, 28B, 28D, 28E) is attached to the circuit board (4),
wherein the second connector (29, 29B, 29C, 29D, 29E) has at least a plug terminal (40a, 40b, 40c, 40d) that is provided upright on the second case member (22), and
wherein the first connector (28, 28B, 28D, 28E) has a jack terminal (45a, 45b, 45c, 45d) that is provided in the portion protruding outward from the edge of the circuit board (4) to be fitted to the plug terminal (40a, 40b, 40c, 40d).

3. The brushless motor according to claim 1,
wherein the first connector (28, 28B, 28D, 28E) has a portion that protrudes outward from an edge of the circuit board (4) when the first connector (28, 28B, 28D, 28E) is attached to the circuit board (4), and has at least a plug terminal (40a, 40b, 40c, 40d) that is provided upright in the portion, and
wherein the second connector (29, 29B, 29C, 29D, 29E) has a connector housing and a jack terminal (45a, 45b, 45c, 45d) to which the plug terminal (40a, 40b, 40c, 40d) is fitted, the jack terminal (45a, 45b, 45c, 45d) and the housing being disposed on the second case member (22) by integral molding.

4. The brushless motor according to claim 2,
wherein the second connector (29, 29B, 29C, 29D, 29E) has a guide projection that is provided upright on the second case member (22) together with the plug terminal (40a, 40b, 40c, 40d), and
wherein the first connector (28, 28B, 28D, 28E) has a guide groove to which the guide projection is fittingly inserted.

5. The brushless motor according to claim 3,
wherein the first connector (28, 28B, 28D, 28E) has a guide projection that is provided upright together with the plug terminal (40a, 40b, 40c, 40d), and
wherein the second connector (29, 29B, 29C, 29D, 29E) has a guide groove to which the guide projection is fittingly inserted.

6. The brushless motor according to claim 1,
wherein the first connector (28, 28B) has a portion that protrudes outward from an edge of the circuit board (4) when the first connector (28, 28B, 28D, 28E) is attached to the circuit board (4),
wherein the second connector (29, 29B, 29C) has a plug terminal provided upright and a peripheral wall (41, 41B, 41C) provided upright around the plug terminal (40a, 40b, 40c, 40d), and
wherein the portion that protrudes outward from the edge of the circuit board (4) is formed so as to be fitted to an inside of the peripheral wall (41, 41B, 41C), and a jack terminal (45a, 45b, 45c, 45d) fitted to the plug terminal is provided in the portion.

7. The brushless motor according to claim 1,
wherein the first connector (28, 28B) has a plug terminal (40a, 40b, 40c, 40d) provided upright and a peripheral wall (41, 41B, 41C) provided upright around the plug terminal (40a, 40b, 40c, 40d), and
wherein the second connector (29, 29B, 29C) has a housing fitted to an inside of the peripheral wall, and
wherein a jack terminal (45a, 45b, 45c, 45d) fitted to the plug terminal (40a, 40b, 40c, 40d) is provided in the housing.

8. The brushless motor according to claim 6 or claim 7,
wherein the peripheral wall (41) has in part thereof an open portion.

9. The brushless motor according to claim 6 or claim 7,
wherein the peripheral wall (41) is formed in a loop shape.

10. The brushless motor according to any one of claims 1 to 9,
wherein a third connector is formed on the second case member (22) by integral molding, the third connector being connected to the second connector (29, 29B, 29C, 29D, 29E) and being fitted to an external connector.

## Patentansprüche

1. Bürstenloser Motor mit einem Gehäuse (1), das eine Leiterplatte (4) beinhaltet und haltet und einen Rotor (3) drehbar gelagert trägt,
wobei das Gehäuse aus einem ersten Gehäuseelement (21) und einem zweiten Gehäuseelement (22) aufgebaut bzw. zusammengesetzt ist, die aneinander angebracht bzw. angepasst sind, wobei die Leiterplatte (4) zwischen dem ersten und dem zweiten Gehäuseelement (21, 22) aufgenommen und gehalten ist, wobei ein zweiter Verbinder (29, 29B, 29C, 29D, 29E) auf bzw. an dem zweiten Gehäuseelement (22) durch integrales Formen bzw. Gießen angeordnet ist,
**dadurch gekennzeichnet,**
**dass** die Leiterplatte (4) und ein erster Verbinder (28, 28B, 28D, 28E), der die Leiterplatte (4) und einen externen Teil elektrisch verbindet, an dem ersten Gehäuseelement (21) angebracht sind, und dass der zweite Verbinder (29, 29B, 29C, 29D, 29E) am ersten Verbinder (28, 28B, 28D, 28E) angebracht bzw. angepasst ist.

2. Bürstenloser Motor nach Anspruch 1, **dadurch gekennzeichnet,**
**dass** der erste Verbinder (28, 28B, 28D, 28E) einen Bereich aufweist, welcher von einem Rand der Leiterplatte (4) nach außen herausragt, wenn der erste Verbinder (28, 28B, 28D, 28E) an der Leiterplatte (4) angebracht ist,
wobei der zweite Verbinder (29, 29B, 29C, 29D, 29E) mindestens einen Steckeranschluss (40a, 40b, 40c, 40d) aufweist, welcher aufrecht auf dem zweiten Gehäuseelement (22) vorgesehen ist, und
wobei der erste Verbinder (28, 28B, 28D, 28E) einen Buchsenanschluss (45a, 45b, 45c, 45d) aufweist, welcher im Bereich vorgesehen ist, welcher von dem Rand der Leiterplatte (4) nach außen hervorragt, um am Steckeranschluss (40a, 40b, 40c, 40d) angebracht zu werden.

3. Bürstenloser Motor nach Anspruch 1, **dadurch gekennzeichnet,**
**dass** der erste Verbinder (28, 28B, 28D, 28E) einen Bereich aufweist, welcher von einem Rand der Leiterplatte (4) nach außen hervorragt, wenn der erste Verbinder (28, 28B, 28D, 28E) an der Leiterplatte (4) angebracht ist, und mindestens einen Steckeranschluss (40a, 40b, 40c, 40d) aufweist, welcher aufrecht im Bereich vorgesehen ist, und wobei der zweite Verbinder (29, 29B, 29C, 29D, 29E) ein Verbindergehäuse und einen Buchsenanschluss (45a, 45b, 45c, 45d) aufweist, an dem der Steckeranschluss (40a, 40b, 40c, 40d) angebracht bzw. angepasst ist, wobei der Buchsenanschluss (45a, 45b, 45c, 45d) und das Gehäuse auf bzw. an dem zweiten Gehäuseelement (22) durch integrales Formen bzw. Gießen angeordnet sind.

4. Bürstenloser Motor nach Anspruch 2, **dadurch gekennzeichnet,**
**dass** der zweite Verbinder (29, 29B, 29C, 29D, 29E) einen Führungsvorsprung aufweist, welcher aufrecht auf dem zweiten Gehäuseelement (22) vorgesehen ist, zusammen mit dem Steckeranschluss (40a, 40b, 40c, 40d), und
wobei der erste Verbinder (28, 28B, 28D, 28E) eine Führungsnut aufweist, in die der Führungsvorsprung passend eingeführt ist.

5. Bürstenloser Motor nach Anspruch 3, **dadurch gekennzeichnet,**
**dass** der erste Verbinder (28, 28B, 28D, 28E) einen Führungsvorsprung aufweist, welcher aufrecht vorgesehen ist, zusammen mit dem Steckeranschluss (40a, 40b, 40c, 40d), und
wobei der zweite Verbinder (29, 29B, 29C, 29D, 29E) eine Führungsnut aufweist, in die der Führungsvorsprung passend eingeführt ist.

6. Bürstenloser Motor nach Anspruch 1, **dadurch gekennzeichnet,**
**dass** der erste Verbinder (28, 28B) einen Bereich aufweist, welcher von einem Rand der Leiterplatte (4) nach außen hervorragt, wenn der erste Verbinder (28, 28B, 28D, 28E) an der Leiterplatte (4) angebracht ist,
wobei der zweite Verbinder (29, 29B, 29C) einen Steckeranschluss aufweist, welcher aufrecht vorgesehen ist, und eine periphere Wand (41, 41B, 41C), die aufrecht um den Steckeranschluss (40a, 40b, 40c, 40d) vorgesehen ist, und
wobei der Bereich, welcher vom Rand der Leiterplatte (4) hervorragt, derart ausgebildet ist, dass dieser zu einer Innenseite der peripheren Wand (41, 41 B, 41C) angebracht bzw. angepasst ist, und ein am Steckeranschluss angebrachter Buchsenanschluss (45a, 45b, 45c, 45d) in dem Bereich vorgesehen ist.

7. Bürstenloser Motor nach Anspruch 1, **dadurch gekennzeichnet,**
**dass** der erste Verbinder (28, 28B) einen Steckeranschluss (40a, 40b, 40c, 40d) aufweist, welcher aufrecht vorgesehen ist, und eine periphere Wand (41, 41B, 41 C), die aufrecht um den Steckeranschluss (40a, 40b), 40c, 40d) vorgesehen ist, und
wobei der zweite Verbinder (29, 29B, 29C, 29D, 29E) ein Gehäuse aufweist, das an einer bzw. eine Innenseite der peripheren Wand angebracht bzw. angepasst ist, und
wobei ein an dem Steckeranschluss (40a, 40b, 40c, 40d) angebrachter Buchsenanschluss (45a, 45b, 45c, 45d) im Gehäuse vorgesehen ist.

8. Bürstenloser Motor nach Anspruch 6 oder Anspruch 7, **dadurch gekennzeichnet,**
**dass** die periphere Wand (41) in einem Teil einen offenen Bereich aufweist.

9. Bürstenloser Motor nach Anspruch 6 oder Anspruch 7, **dadurch gekennzeichnet,**
**dass** die periphere Wand (41) in einer Schleifenform ausgebildet ist.

10. Bürstenloser Motor nach einem der Ansprüche 1 bis 9, **dadurch gekennzeichnet,**
**dass** ein dritter Verbinder auf dem zweiten Gehäuseelement (22) durch integrales Formen bzw. Gießen gebildet ist, wobei der dritte Verbinder mit dem zweiten Verbinder (29, 29B, 29C, 29D, 29E) verbunden ist und an einem externen Verbinder angebracht bzw. angepasst ist.

## Revendications

1. Moteur sans balai comprenant un boîtier (1) qui tient et contient un circuit imprimé (4) et supporte un rotor (3) d'une manière rotative,
conçus de telle manière que ledit boîtier est composé d'un premier élément de boîtier (21) et d'un deuxième élément de boîtier (22) qui sont joints, avec le circuit imprimé (4) qui est contenue et tenu entre lesdits premier et deuxième éléments de boîtier (21, 22), dans lequel un deuxième connecteur (29, 29B, 29C, 29D, 29E) est disposé sur le deuxième élément de boîtier (22) par moulage solidaire,
**caractérisé en ce que** :
le circuit imprimé (4) et le premier connecteur (28, 28B, 28D, 28E) qui connecte électriquement le circuit imprimé (4) et une partie externe, sont fixés au premier élément de boîtier (21) et **en ce que** le deuxième connecteur (29, 29B, 29C, 29D, 29E) est monté sur le premier connecteur (28, 28B, 28D, 28E).

2. Moteur sans balai selon la revendication 1,
conçus de telle manière que le premier connecteur (28, 28B, 28D, 28E) a une partie qui fait saillie vers l'extérieur à partir d'un bord du circuit imprimé (4), lorsque le premier connecteur (28, 28B, 28D, 28E) est fixé au circuit imprimé (4),
dans lequel le deuxième connecteur (29, 29B, 29C, 29D, 29E) a au moins une borne mâle (40a, 40b, 40c, 40d) qui est prévue droite sur le deuxième élément de boîtier (22), et
dans lequel le premier connecteur (28, 28B, 28D, 28E) a une borne femelle (45a, 45b, 45c, 45d) qui est prévue dans la partie faisant saillie vers l'extérieur à partir du bord de le circuit imprimé (4) pour être montée sur la borne mâle (40a, 40b, 40c, 40d).

3. Moteur sans balai selon la revendication 1,
conçus de telle manière que le premier connecteur (28, 28B, 28D, 28E) a une partie qui fait saillie vers l'extérieur à partir d'un bord de le circuit imprimé (4) lorsque le premier connecteur (28, 28B, 28D, 28E) est fixé sur le circuit imprimé (4), et a au moins une borne mâle (40a, 40b, 40c, 40d) qui est prévue droite dans la partie, et dans lequel le deuxième connecteur (29, 29B, 29C, 29D, 29E) a un boîtier de connecteur et une borne femelle (45a, 45b, 45c, 45d) à laquelle la borne mâle (40a, 40b, 40c, 40d) est fixée, la borne femelle (45a, 45b, 45c, 45d) et le boîtier étant disposés sur le deuxième élément de boîtier (22) par moulage solidaire.

4. Moteur sans balai selon la revendication 2,
conçus de telle manière que le deuxième connecteur (29, 29B, 29C, 29D, 29E) a une saillie de guidage qui est prévue droite sur le deuxième élément de boîtier (22) conjointement avec la borne mâle (40a, 40b, 40c, 40d), et
dans lequel le premier connecteur (28, 28B, 28D, 28E) a une rainure de guidage dans laquelle la saillie de guidage est parfaitement insérée.

5. Moteur sans balai selon la revendication 3,
conçus de telle manière que le premier connecteur (28, 28B, 28D, 28E) a une saillie de guidage qui est prévue droite conjointement avec la borne mâle (40a, 40b, 40c, 40d), et
dans lequel le deuxième connecteur (29, 29B, 29C, 29D, 29E) a une rainure de guidage dans laquelle la saillie de guidage est parfaitement insérée.

6. Moteur sans balai selon la revendication 1,
conçus de telle manière que le premier connecteur (28, 28B) a une partie qui fait saillie vers l'extérieur à partir d'un bord de le circuit imprimé (4), lorsque le premier connecteur (28, 28B, 28D, 28E) est fixé sur le circuit imprimé (4),
dans lequel le deuxième connecteur (29, 29B, 29C) a une borne mâle prévue droite et une paroi périphérique (41, 41B, 41C) prévue droite autour de la borne mâle (40a, 40b, 40c, 40d), et
dans lequel la partie qui fait saillie vers l'extérieur à partir du bord de le circuit imprimé (4) est formée afin de s'adapter dans un intérieur de la paroi périphérique (41, 41 B, 41 C), et la borne femelle (45a, 45b, 45c, 45d) fixée à la borne mâle est prévue dans la partie.

7. Moteur sans balai selon la revendication 1,
conçus de telle manière que le premier connecteur (28, 28B) a une borne mâle (40a, 40b, 40c, 40d) prévue droite et une paroi périphérique (41, 41B, 41 C) prévue droite autour de la borne mâle (40a, 40b, 40c, 40d), et dans lequel le deuxième connecteur (29, 29B, 29C) a un boîtier monté sur un intérieur de la paroi périphérique, et
dans lequel une borne femelle (45a, 45b, 45c, 45d) montée sur la borne mâle (40a, 40b, 40c, 40d) est prévue dans le boîtier.

8. Moteur sans balai selon la revendication 6 ou la revendication 7,
conçus de telle manière que la paroi périphérique (41) a, dans l'une de ses parties, une partie ouverte.

9. Moteur sans balai selon la revendication 6 ou la revendication 7,
conçus de telle manière que la paroi périphérique (41) est formée selon une forme de boucle.

10. Moteur sans balai selon l'une quelconque des revendications 1 à 9,
conçus de telle manière que un troisième connecteur est formé sur le deuxième élément de boîtier (22) par moulage solidaire, le troisième connecteur étant connecté au deuxième connecteur (29, 29B, 29C, 29D, 29E) et étant monté sur un connecteur externe.
